# EUROPÄISCHE PATENTANMELDUNG

(11) **EP 2 336 091 A1**
(43) Veröffentlichungstag der Anmeldung: **22.06.2011**
(21) Anmeldenummer: 10193940.3
(22) Anmeldetag: 07.12.2010
(51) Int. Cl.: C02F 1/467, C02F 1/461

(54) **Tauchzelle zur elektrolytischen Desinfektion von Wasser**

(30) Priorität: 16.12.2009 AT 19972009
(71) Anmelder: pro aqua Diamantelektroden Produktion GmbH & Co KG, 8712 Niklasdorf (AT)
(72) Erfinder: Hermann, Robert, 8600, Oberaich (AT); Staber, Wolfgang, 8600, Bruck an der Mur (AT); Schelch, Michael, 8600, Oberaich (AT); Wesner, Wolfgang, 1050, Wien (AT)
(74) Vertreter: Vinazzer, Edith

(57) **Zusammenfassung**

Die Erfindung betrifft ein Tauchzelle zur Desinfektion von Wasser aus Badepools, insbesondere Whirlpools, mit einer vom Wasser durchströmbaren Elektrolysezelle (10) mit zwei parallel und in einem gegenseitigen Abstand zueinander positionierten Kontaktelektroden (1, 2) und vorzugsweise mit zumindest einer zwischen den Kontaktelektroden(1, 2) unter einem Abstand zu diesen angeordneten bipolaren Diamantpartikelelektrode (3).

Die Elektroden (1, 2, 3) sind mit zwischen ihnen befindlichen Abstandhaltern (4) zu einem länglichen, etwa quaderförmigen Elektrodenpaket zusammengefügt, welches unter Freilassung von Zu- und Abfluss in eine Ummantelung (6) aus Kunststoff oder Kunstharz eingebettet ist. Es wird daher dem Anwender/Kunden eine auf einfache Weise im Poolwasserkreislauf oder in der Whirlwanne positionierbare Tauchzelle zur Verfügung gestellt, die der Anwender/Kunde selbst "einbauen" oder bei Bedarf problemlos entfernen bzw. austauschen kann.

## Beschreibung

Die Erfindung betrifft eine Tauchzelle zur elektrolytischen Desinfektion von Wasser aus Badepools, insbesondere Whirlpools, mit einer vom Wasser durchströmbaren Elektrolysezelle mit zwei parallel und in einem gegenseitigen Abstand zueinander positionierten Kontaktelektroden und vorzugsweise mit zumindest einer zwischen den Kontaktelektroden unter einem Abstand zu diesen angeordneten bipolaren Diamantpartikelelektrode.

Es ist bekannt, Elektrolysezellen zur Desinfektion von Poolwasser einzusetzen. Die Desinfektion mit Elektrolysezellen ist nahezu wartungsfrei, eine Zudosierung von Chlor in Tabletten- und Pulverform kann unterbleiben. Die Elektrolysezellen werden in den Poolwasserkreislauf, insbesondere im Bypass, eingebaut und über eine entsprechende Mess- und Regeltechnik, optional über eine Zeitsteuerung, gesteuert. Damit kann in Abhängigkeit von der Poolgröße eine kontinuierliche Desinfektion des Badewassers gewährleistet werden.

Der Erfindung liegt die Aufgabe zu Grunde, eine für kleine Pools, insbesondere für Whirlpools, geeignete und im Poolwasserkreislauf oder in der Wanne selbst positionierbare Tauchzelle zur Verfügung zu stellen, die vom Anwender/ Kunden problemlos positioniert und bei Bedarf ausgetauscht werden kann.

Gelöst wird die gestellte Aufgabe erfindungsgemäß dadurch, dass die Elektroden mit einem bzw. mit zwischen ihnen befindlichen Abstandhalter(n) zu einem länglichen, etwa quaderförmigen Elektrodenpaket zusammengefügt sind, welches unter Freilassung von Zu-und Abfluss in eine Ummantelung aus Kunststoff oder Kunstharz eingebettet ist.

Durch die Erfindung wird dem Kunden bzw. Anwender eine Tauchzelle zur Verfügung gestellt, die er gefahrlos selbst, beispielsweise im Filterstutzen des Pools oder direkt im Pool bzw. in der Whirlwanne, positionieren kann und bei Bedarf zur Reinigung oder zum Austausch entnehmen kann. Es ist kein besonderer Installationsaufwand für die Tauchzelle erforderlich.

Gemäß einer bevorzugten Ausführungsform der Erfindung wird das Elektrodenpaket derart erstellt, dass es an seinen mit der Ummantelung in Kontakt stehenden Seiten geschlossen ist. Dadurch wird ein unerwünschtes Einfließen des Kunststoffes oder Kunstharzes in die Elektrolysezelle bei der Herstellung der Ummantelung verhindert.

Für eine bequeme, leichte Handhabung und Positionierung der Tauchzelle im Poolwasserkreislauf bzw. in der Whirlwanne, etwa an einer Halterung, ist es von Vorteil, wenn die Ummantelung zylindrisch ausgeführt ist.

Bei einer Ausführungsform der Erfindung besteht die Ummantelung aus ausgehärtetem Gießharz. Diese Ummantelung lässt sich kostengünstig und auf einfache Weise herstellen.

Bei einer anderen Ausführungsform besteht die Ummantelung aus einem mit dem Elektrodenpaket durch Spritzgießen verbundenen Kunststoff. Bei größeren Stückzahlen ist diese Art der Herstellung der Ummantelung rationeller und kostengünstiger.

Jeder Abstandhalter ist im Wesentlichen als rechteckiger Rahmen aus einem Kunststoff ausgeführt, welcher außen- und innenseitig jeweils mit einer Elektrode verbunden ist, wobei an den stirnseitigen Rahmenteilen Öffnungen zum Durchströmen des Wassers freigelassen sind. Mit derart ausgeführten Abstandhaltern lassen sich die Elektroden besonders einfach zu einem quaderförmigen Elektrodenpaket zusammenfügen.

Die Elektroden können auf einfache Weise mit dem umlaufenden Rahmen des Abstandhalters bzw. der Abstandhalter verbunden, beispielsweise verklebt, werden.

Bei einer alternativen Ausführungsform können die Kunststoffabstandhalter durch Aufspritzen des Kunststoffmaterials auf die Elektroden gebildet werden und derart mit diesen fest verbunden sein.

Die mit den Kontaktelektroden verbundenen elektrischen Leiter sind insbesondere in einem gemeinsamen Kabel aus der Ummantelung nach außen geführt. Es braucht daher nur ein Kabel bis zur Steuereinheit geführt und hier angeschlossen werden. Die Steuereinheit steuert den Betrieb der Elektrolysezelle hinsichtlich Zeitdauer und Zeitintervalle insbesondere in Abhängigkeit von ermittelten Messwerten des Wassers, beispielsweise des freien Chlors und/oder des Redoxpotentials.

Weitere Merkmale, Vorteile und Einzelheiten der Erfindung werden nun anhand der schematischen Zeichnung, die ein Ausführungsbeispiel darstellt, näher beschrieben. Dabei zeigen
Fig. 1 eine Ansicht einer Ausführungsform einer erfindungsgemäß ausgeführten Tauchzelle,
Fig. 2 einen Schnitt entlang der durch die Linie A-A versinnbildlichten Schnittebene der Fig. 1 und
Fig. 3a und 3b Ansichten eines Abstandhalters.

Die Erfindung befasst sich mit einer Tauchzelle zur elektrolytischen Desinfektion von Poolwasser, insbesondere von Badewasser eines Whirlpools. Bei der elektrolytischen Wasserdesinfektion wird elektrischer Strom dafür genutzt, Desinfektionsmittel direkt im Wasser durch elektrochemische Umwandlung der Wasserinhaltsstoffe zu erzeugen. Dabei wird im In-situ-Betrieb das zu behandelnde Wasser direkt durch eine Elektrolysezelle in die Tauchzelle geleitet und die aus dem Wasser gebildeten Desinfektionsmittel gehen unmittelbar in das zu behandelnde Wasser über. Mit der im folgenden näher beschriebenen Elektrolysezelle werden als Desinfektionsmittel insbesondere freies Chlor, Ozon und Wasserstoffperoxid gebildet.

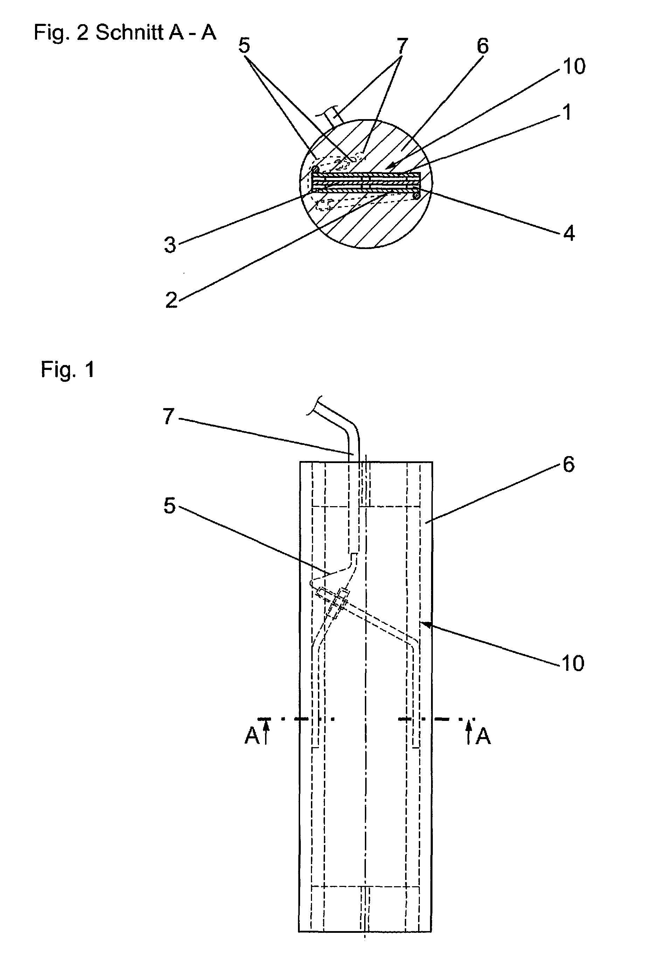

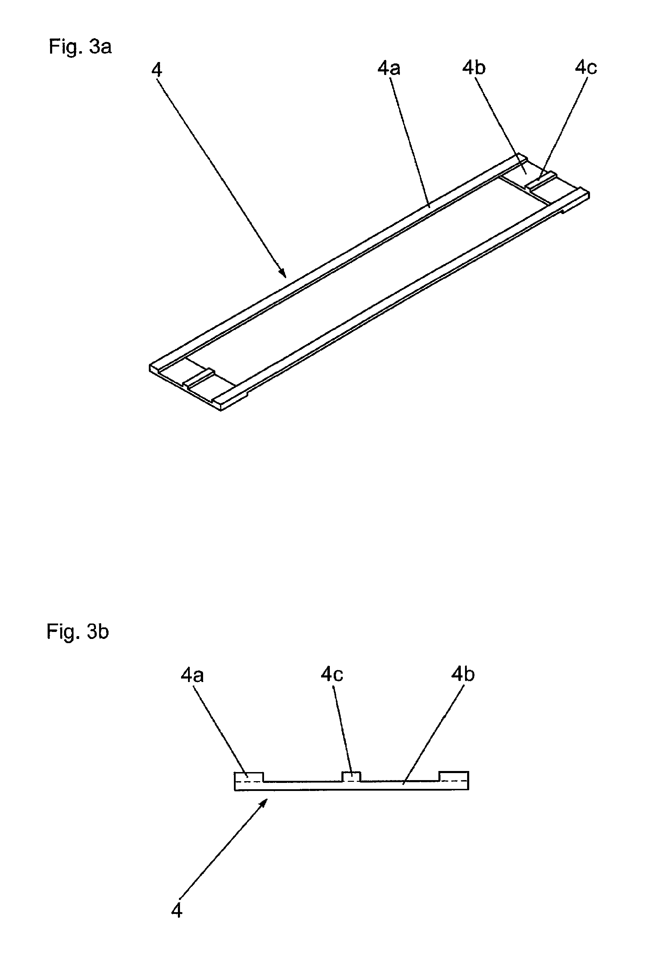

Die in Fig. 1 und Fig. 2 gezeigte, in die Tauchzelle eingebettete Elektrolysezelle 10 weist als Anode und Kathode zwei parallel zueinander angeordnete, langgestreckt rechteckig ausgeführte Kontaktelektroden 1, 2 auf, zwischen welchen, in einem Abstand zu den beiden Kontaktelektroden 1, 2, eine bipolare Diamantpartikelelektrode 3 angeordnet ist. Je ein aus Kunststoff bestehender Abstandhalter 4 befindet sich zwischen je einer der Kontaktelektroden 1, 2 und der Diamantpartikelelektrode 3. Fig. 3a zeigt die Innenseite des Abstandhalters 4, Fig. 3b zeigt eine Stirnseite. Der Abstandhalter 4 ist als rechteckiger Kunststoffrahmen ausgeführt, an dessen einer Seite, der späteren Außenseite der Elektrolysezelle 10, die jeweilige Kontaktelektrode 1, 2, die Rahmenöffnung verschließend und mit den langen Rahmenseiten 4a bündig abschließend, aufgeklebt ist. An der Innenseite sind die Rahmenquerseiten 4b gegenüber den Rahmenlängsseiten 4a zurückversetzt und mittig mit einem zusätzlichen Steg 4c, welcher sich, wie Fig. 3b zeigt, auf dem Niveau der Rahmenlängsseiten 4a befindet, versehen. Die Diamantpartikelelektrode 3 ist mit je einer Seite an den Innenseiten der beiden Abstandhalter 4 angeklebt. Die Kontaktierung der beiden Kontaktelektroden 1, 2 erfolgt insbesondere mittels nicht gezeigter Titanstäbe, die an den Kontaktelektroden 1, 2 durch entsprechende Fügeverfahren, wie Schweißen oder Schrauben, angebracht sind. Mit den Titanstäben sind elektrische Leiter 5 verbunden, welche gemeinsam, in einem einzigen Kabel 7, aus der Elektrolysezelle 10 nach außen geführt sind. Die erforderliche Isolation der Anschlussstellen - Kabel zu Titanstäben und Titanstäbe zu Kontaktelektroden 1, 2 - kann beispielsweise mittels PTFE-Schrumpfschläuchen erfolgen. Das derart gebildete Elektrodenpaket wird außenseitig in eine Kunstharzummantelung 6, welche die Elektrolysezelle 10 zylindrisch umgibt und deren Stirnseiten frei lässt, eingebettet. Zur Herstellung der Ummantelung 6 wird die fertig konfektionierte Elektrolysezelle 10 in eine Gussform eingebracht und ein 2-Komponenten-Kunstharz, beispielsweise Polyesterharz oder Epoxidharz, angerührt und eingegossen. Nach dem Aushärten des Harzes wird die Tauchzelle der Gussform entnommen und es werden an den Stirnseiten nicht dargestellte Deckel positioniert. Die elektrischen Leiter 5 und ein Stück des Kabels 7 sind ebenfalls in das Harz eingegossen. Alternativ kann das Elektrodenpaket in einer Spritzgießform in bekannter Weise mit einem Kunststoff, beispielsweise Polypropylen oder Polyethylen, umspritzt werden, welcher nach dem Härten die Ummantelung bildet. Es kann ferner ein Kunststoffrohr verwendet werden, welches in einer Gussform mit Kunstharz befüllt wird.

Die beiden Kontaktelektroden 1, 2 können handelsübliche Elektroden, insbesondere aus Iridium/ Ruthenium oder Platin beschichtetem Titanblech, Graphitelektroden oder Diamantelektroden sein. Die bipolare Diamantpartikelelektrode 3 kann eine Elektrode gemäß der WO-A-2007 116004 sein. Diese bekannten Diamantpartikelelektroden bestehen aus synthetisch hergestellten und elektrisch leitfähigen (dotierten) Diamantpartikeln, welche einlagig in eine Trägerschicht aus Kunststoff eingebettet sind und an beiden Seiten der Trägerschicht freigelegt sind.

Zum Betrieb wird die Tauchzelle vorzugsweise im Filterstutzen des Pools oder auch, bei Verwendung in einem Whirlpool, direkt in der Whirlwanne an einer Halterung positioniert. Im Filterstutzen braucht keine gesonderte Montage vorgenommen werden, die Tauchzelle wird lediglich in den Filterstutzen gehängt. Die Tauchzelle kann sehr leicht durch den Kunden selbst aus dem System herausgenommen und bei Bedarf gereinigt oder getauscht werden.

Die Tauchzelle wird in bekannter Weise mit einer Stromversorgung (Netz oder Akkumulator) und einer Steuereinheit verbunden, welche den Betrieb der Tauchzelle steuert/regelt. Der Betrieb der Tauchzelle kann in bestimmten Zeitintervallen, insbesondere in Abhängigkeit von ermittelten Messwerten, insbesondere dem Gehalt an freiem Chlor oder dem Redoxpotential des Wassers, gesteuert werden. Die im Wasser gegebene elektrische Leitfähigkeit reicht im Allgemeinen aus, den Betrieb der Elektrolysezelle 10 zu gewährleisten. Die Leitfähigkeit des Wassers kann jedoch bei Bedarf durch Zugabe einer geringen Menge an Salz, insbesondere im Bereich zwischen 0,5 g und 1,5 g pro Liter, erhöht werden. Wie lange die Zeitintervalle des Betriebes der Tauchzelle gewählt werden, richtet sich nach der Intensität der Poolnutzung bzw. der Anzahl der den Pool nutzenden Personen. Die Intervalle können direkt durch den Anwender eingestellt und bei Bedarf verkürzt oder verlängert werden. Es ist von Vorteil, an der Steuereinheit einen Betrieb der Tauchzelle zur Intensivreinigung vorzusehen, um nach einem Badevorgang die verbrauchten Oxidationsmittel möglichst rasch wieder nachzuproduzieren.

Zur Entfernung von Kalkablagerungen an den Elektroden wird regelmäßig und automatisch eine Polumkehr durchgeführt, deren Zeitintervalle ebenfalls einstellbar sind und sich insbesondere nach der Wasserhärte richten, wobei eine Polumkehr bei weichem Wasser erst nach einer längeren Zeitdauer, insbesondere zwischen ein und drei Stunden, erfolgt, bei härterem Wasser insbesondere nach fünfzehn bis dreißig Minuten.

Die Erfindung ist auf das dargestellte Ausführungsbeispiel nicht eingeschränkt. So kann beispielsweise die Ummantelung eine andere Gestalt, etwa in Quaderform, aufweisen.

Das Elektrodenpaket bzw. die Elektrolysezelle kann mehrere bipolare Diamantpartikelelektroden beinhalten. Im einfachsten Fall kann die Elektrolysezelle lediglich zwei Kontaktelektroden, wie erwähnt, aufweisen, welche mittels eines Abstandhalters voneinander in einem Abstand gehalten sind. Die Abstandhalter können ferner derart hergestellt werden, dass in einer Spritzgießform in bekannter Weise Kunststoffmaterial auf die Elektroden gespritzt wird.

### Bezugsziffernliste

- 1: Kontaktelektrode
- 2: Kontaktelektrode
- 3: Diamantpartikelelektrode
- 4: Abstandhalter
- 4a: Längsseite
- 4b: Querseite
- 4c: Steg
- 5: elektrischer Leiter
- 6: Ummantelung
- 7: Kabel
- 10: Elektrolysezelle

## Patentansprüche

1. Tauchzelle zur Desinfektion von Wasser aus Badepools, insbesondere Whirlpools, mit einer vom Wasser durchströmbaren Elektrolysezelle (10) mit zwei parallel und in einem gegenseitigen Abstand zueinander positionierten Kontaktelektroden (1, 2) und vorzugsweise mit zumindest einer zwischen den Kontaktelektroden (1, 2) unter einem Abstand zu diesen angeordneten bipolaren Diamantpartikelelektrode (3),
**dadurch gekennzeichnet,**
**dass** die Elektroden (1, 2, 3) mit einem bzw. mit zwischen ihnen befindlichen Abstandhalter(n) (4) zu einem länglichen, etwa quaderförmigen Elektrodenpaket zusammengefügt sind, welches unter Freilassung von Zu- und Abfluss in eine Ummantelung (6) aus Kunststoff oder Kunstharz eingebettet ist.

2. Tauchzelle nach Anspruch 1, **dadurch gekennzeichnet, dass** das Elektrodenpaket an seinen mit der Ummantelung (6) in Kontakt stehenden Seiten geschlossen ist.

3. Tauchzelle nach Anspruch 1 oder 2, **dadurch gekennzeichnet, dass** die Ummantelung (6) zylindrisch ausgeführt ist.

4. Tauchzelle nach einem der Ansprüche 1 bis 3, **dadurch gekennzeichnet, dass** die Ummantelung (6) aus ausgehärtetem Gießharz besteht.

5. Tauchzelle nach einem der Ansprüche 1 bis 3, **dadurch gekennzeichnet, dass** die Ummantelung (6) aus mit dem Elektrodenpaket durch Spritzgießen verbundenem Kunststoff besteht.

6. Tauchzelle nach einem der Ansprüche 1 bis 5, **dadurch gekennzeichnet, dass** jeder Abstandhalter (4) im Wesentlichen als rechteckiger Rahmen ausgeführt ist, welcher außen- und innenseitig jeweils mit einer Elektrode (1, 2, 3) verbunden ist, wobei an den stirnseitigen Rahmenteilen (4b) Öffnungen zum Durchströmen des Wassers freigelassen sind.

7. Tauchzelle nach einem der Ansprüche 1 bis 6, **dadurch gekennzeichnet, dass** die Elektroden (1, 2, 3) mit dem/den Abstandhalter(n) (4) randseitig verbunden, insbesondere verklebt sind.

8. Tauchzelle nach einem der Ansprüche 1 bis 6, **dadurch gekennzeichnet, dass** der Abstandhalter (4) ein auf eine der Elektroden (1, 2, 3) aufgespritzter Kunststoffteil ist.

9. Tauchzelle nach einem der Ansprüche 1 bis 8, **dadurch gekennzeichnet, dass** die mit den Kontaktelektroden (1, 2) verbundenen elektrischen Leiter (5) in einem gemeinsamen Kabel (7) nach außen geführt sind.

10. Tauchzelle nach einem der Ansprüche 1 bis 9, **dadurch gekennzeichnet, dass** die Kontaktelektroden (1, 2) aus Iridium/ Ruthenium oder Platin beschichtetem Titanblech bestehen oder Graphitelektroden oder Diamantelektroden sind.

11. Tauchzelle nach einem der Ansprüche 1 bis 10, **dadurch gekennzeichnet, dass** sie an eine Steuereinheit anschließbar ist, welche den Betrieb der Elektrolysezelle (10) hinsichtlich Zeitdauer und Zeitintervallen, insbesondere in Abhängigkeit ermittelter Messwerte des Wassers, beispielsweise des freien Chlors und/oder des Redoxpotentials, steuert bzw. regelt.
